Europäisches Patentamt

European Patent Office

Office européen des brevets

(11) Publication number: **0 138 343**
A1

# EUROPEAN PATENT APPLICATION

(21) Application number: **84305864.5**

(22) Date of filing: **28.08.84**

(51) Int. Cl.⁴: **B 62 B 9/12**

(30) Priority: **01.09.83 ZA 836487**
**25.06.84 ZA 840566**

(43) Date of publication of application: **24.04.85**
**Bulletin 85/17**

(84) Designated Contracting States: **AT BE CH DE FR GB IT LI NL SE**

(71) Applicant: **PINBO PRECISION GRINDERS AND SHARPENERS (PROPRIETARY) LIMITED, 157 Gardiner Avenue, Brakpan Transvaal (ZA)**

(72) Inventor: **Bosch, Johannes Godlieb, 5 Milburn Street Rynfield, Benoni Transvaal (ZA)**
Inventor: **Bosch, Neill Johathan, 6 Jeffrey Avenue Morehill, Benoni Transvaal (ZA)**

(74) Representative: **Brereton, Paul Arthur et al, REDDIE & GROSE 16 Theobalds Road, London WC1X 8PL (GB)**

(54) Perambulator reciprocator.

(57) This reciprocator has a frame comprising two spaced tracks 10, 12 and rigid members 14 and 16 spanning between the tracks. Fixed to the frame is a motor driving an output shaft to which a connecting rod 42 is eccentrically connected. The connecting rod can be secured to the axle of a perambulator to move it back and forth on the tracks when the motor is operational. The spacing of the tracks is adjustable to suit different perambulators.

PERAMBULATOR RECIPROCATOR

## BACKGROUND TO THE INVENTION

THIS invention relates to a perambulator reciprocator.

It is well known that babies can be lulled to sleep by rocking or reciprocating their perambulators. An object of this invention is to provide means whereby a lulling reciprocation can be achieved.

## SUMMARY TO THE INVENTION

The invention provides a perambulator reciprocator which includes two tracks for supporting and guiding the wheels of a perambulator, rigid transverse members for adjustably spacing the tracks apart from one another and for maintaining them in parallel with one another, the tracks and the members forming a frame, a motor connected to the frame for driving an output shaft, and a connecting rod connected eccentrically to the output shaft and connectable to the axle of a perambulator to reciprocate the perambulator back and forth on the tracks when the motor is operational.

The motor is preferable a 12v DC motor, the reciprocator including a 12v DC transformer.

## BRIEF DESCRIPTION OF THE DRAWINGS

Figure 1 shows a perspective view of a device according to the invention;

Figure 2 shows an enlarged, exploded detail of the corner marked "A" in Figure 1;

Figure 3 shows an enlarged, exploded detail of the corner marked "B" in Figure 1; and

Figure 4 shows a view in the direction of the arrow "C" in Figure 1.

## DESCRIPTION OF A PREFERRED EMBODIMENT

The device illustrated in the Figures comprises two tracks 10 and 12 a front cross-bar 14 linking the forward ends of the tracks, and a rear cross-bar 16 linking the rear ends of the tracks. The tracks 1 and 12 are basically angle sections with the upright legs of the ang having thickened portions 18 adjacent the laterally extending legs o the angles.

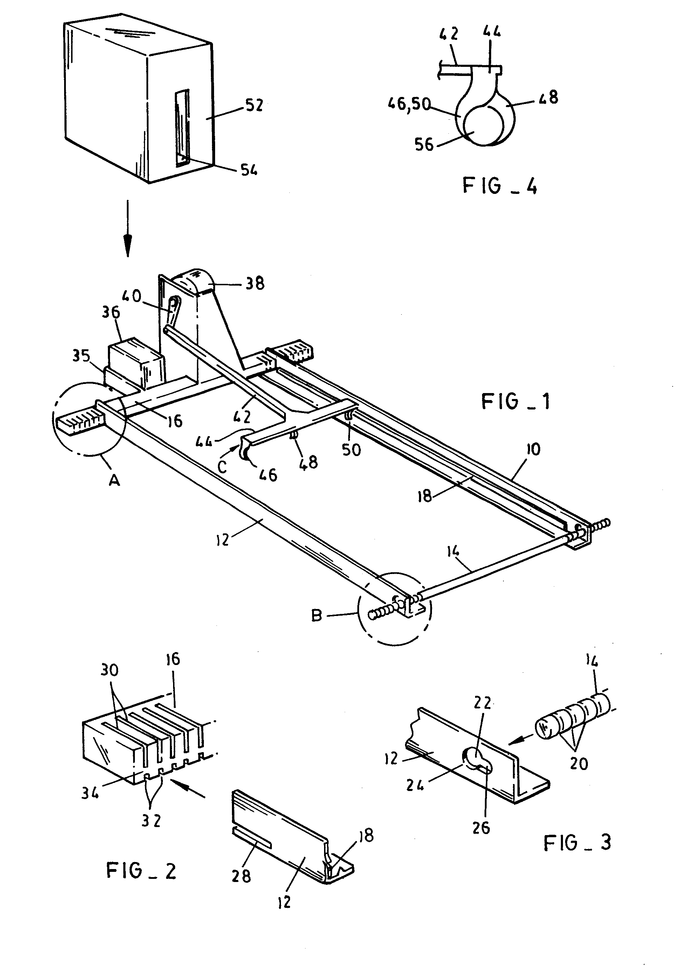

The front cross-bar 14, which can be seen in more detail in Figure 3 basically a round section rod with a series of spaced, annular groov 20 towards either end. The cross-bar 14 is secured transversely to forwards ends of the tracks 10 and 12 by first feeding the ends of t cross-bar through the large portions 22 of key-hole shaped apertures at the ends of the tracks and then drawing chosen ones of the groove 20 into the smaller portions 26 of the apertures 24 to engage them t in a friction-tight manner.

Figure 2 illustrates the mode of connection between the rear ends of tracks 10 and 12 and the rear cross-bar 16. The rear ends of the tr are slotted at 28, and the end regions of the cross-bar 16 are forme with spaced upper and lower slots 30 and 32. Small bridging portion

0138343

34 located between the slots 30 and 32 are receivable as friction fits
in the slots 28 of the tracks. It will be seen that the mode of
connection at the front and rear ends of the tracks allows for their
spacing to be adjusted over a wide range.

Fixed to the rear cross bar is a base 35 mounting a 12v DC transformer
36. An upstanding bracket fixed to the base mounts a 12v DC motor (not
shown) and a gearbox 38, to the output shaft of which is connected one
end of a link 40. The other end of the link is pinned to a further
link 42 carrying a transverse rod 44 fitted with three flexible connecting formations 46, 48 and 50. There is a lid 52 which is shaped
to fit over the base to conceal the motor, gearbox and transformer.
When assembled, the link 42 protrudes through a vertical slot 54 in
the front face of the lid 52. The rear face of the lid (not shown)
mounts a switch for controlling the supply of electricity from a
standard 240 v electrical socket to the transformer.

In operation, a perambulator is wheeled onto the device so that its
wheels fit snugly between the upright legs of the tracks 10 and 12. The
spacing of the tracks can, of course be altered to suit the wheel spacing
of the perambulator. Next, the transverse rod 44, is connected to a wheel
axle 56 of the perambulator. Figure 4 shows that this is achieved by
bending the two outer connecting formations 46 and 50 behind the axle and
bending the inner connecting formation 48 over the axle.

Current is now supplied to the motor, with the result that the rotation
of its output shaft is translated by the cranked connection constituted
by the links 40 and 42 into linear reciprocation of the rod 44 and
hence of the perambulator.

It has been found to be important for the motor etc, to be connected to
the frame constituted by the tracks and cross-bars in order to avoid it
moving about when operating to reciprocate a perambulator and its occupant.

The thickened portions 18 of the upright legs of the tracks 10 and 1 lessen the contact area between the sides of the wheels of the peramb and the legs of the tracks so lessening the frictional resistance to movement of the perambulator.

The use of a 12v DC motor permits the use of a standard 12v car batt when there is other electrical power supply available, the battery this case being connected directly to the motor terminals. This in means that it is possible for the device to be used even when carava or camping. Also, there is less danger of serious electrical injury a 12v motor.

Except for the motor, transformed and gearbox, the device may be form wholly of plastic material, resulting in it being light and easily manageable by a mother. Also, the frame can quickly be disassembled easy of storage when not in use.

The electrical circuitry of the device will include an ON/OFF switch also include an electronic speed control facility operable by a conti for regulating the speed of the motor and hence the speed of recipro of the perambulator.

CLAIMS:                                    0138343

1.

A perambulator reciprocator characterized in that it includes two
tracks for supporting and guiding the wheels of a perambulator,
rigid transverse members for adjustably spacing the tracks apart
from one another and for maintaining them in parallel with one
another, the tracks and the members forming a frame, a motor connected
to the frame for driving an output shaft, and a connecting rod
connected eccentrically to the output shaft, and a connecting rod
connected eccentrically to the output shaft and connectable to
the axle of a perambulator to reciprocate the perambulator back
and forth on the tracks when the motor is operational.

2.

A perambulator reciprocator according to claim 1, characterized
in that the tracks comprise angle sections.

3.

A perambulator reciprocator according to either one of the preceding
claims, characterzed in that there are two transverse members and
the motor is connected to one of the members.

4.

A perambulator reciprocator according to claim 3, characterized
in that the members carry spaced formations at least towards their
ends for engagement with the tracks.

5.

A perambulator reciprocator according to claim 4, characterized
in that the formations carried by the members are engagable frictionally
with the tracks.

6.

A perambulator reciprocator according to claim 1, characterized
in that the motor is a 12 v DC motor, the reciprocator including
a 12 v DC transformer.

7.

A perambulator reciprocator according to claim 1, characterized in that the
connecting rod carries a transverse rod having resilient formations which are
deformable to engage the axle of the perambulator.

0138343

8.

A perambulator reciprocator characterized in that it comprises:
- a pair of tracks each having the cross-section of an angle, the tracks being intended for spaced, parallel location on the ground with one leg of each angle in an upright attitude and the other legs of the angles opposing one another, the tracks serving in use to support and guide the wheels of the perambulator;
- a longitudinal slot at one end of each track which extends to the end of the track,
- a longitudinally extending, key-hole shaped aperture at the opposite end of each track;
- a first, transversely extending member having a series of spaced formations selectively engagable by a slot at the end of a track;
- a second, transversely extending member having a series of spaced formations selectively engagable in a key-hole shaped aperture at the opposite end of a track;
- the tracks and the first and second transverse members consituting a frame in which the spacing of the tracks is variable to suit different perambulators;
- a motor connected to the frame for driving an output shaft;
- a connecting rod connected eccentrically at one end to the output shaft;
- a transverse rod carried by the connecting rod at the end opposite to the end which is connected eccentrically to the output shaft; and
- resilient, hook shaped formations on the transverse rod which are engagable with the axle of the perambulator;

the arrangement being such that, when operational with the axle of the perambulator connected to the transverse rod, the perambulator is reciprocate back and forth on the tracks without movement of the reciprocator on the ground.

0138343

1/1

FIG _ 4

FIG _ 1

FIG _ 2

FIG _ 3

0138343

European Patent
Office

EUROPEAN SEARCH REPORT

. Application number

EP 84 30 5864

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 888 086 (D.C.O'BRIEN) *Column 1, lines 71,72; columns 2,3,4, lines 1-18; figures 1-8* | 1,2,8 | B 62 B 9/22 |
| X | GB-A-2 061 836 (ALAN CAMPBELL BELL) *Figures 1,2; page 1, lines 43-107* | 1,3,8 | |
| X | FR-A- 786 466 (KÜNZLI) *Figures 1-4; page 1, lines 17-60; page 2, lines 1-53* | 1,3,8 | |
| A | US-A-3 628 620 (ROBERT H.BYERS) *Figures 1-4; column 1, lines 47-75; column 2, lines 1-38* | 1,8 | |
| A | US-A-1 924 493 (F.P.GRUNKEMEYER) *Figures 1-5; page 1, lines 30-90* | 1,8 | TECHNICAL FIELDS SEARCHED (Int. Cl.4)  B 62 B |
| A | FR-A-1 377 586 (KARAHASANOVIC) *Figures 1,2; pages 1,2* | 1,8 | |
| A | FR-A-1 377 584 (KARAHASANOVIC) *Figure 1; pages 1,2* | 1,8 | |

The present search report has been drawn up for all claims

| Place of search THE HAGUE | Date of completion of the search 27-11-1984 | Examiner VANNESTE M.A.R. |
|---|---|---|